# EUROPÄISCHE PATENTSCHRIFT

(11) **EP 2 287 024 B1**
(45) Veröffentlichungstag und Bekanntmachung des Hinweises auf die Patenterteilung: **01.10.2014**
(21) Anmeldenummer: 10008041.5
(22) Anmeldetag: 02.08.2010
(51) Int. Cl.: B60G 7/00, B60G 17/016, B60G 17/08

(54) **Vorrichtung zur aktiven Spureinstellung**
Device for actively adjusting toe-in
Dispositif de réglage du parallélisme

(30) Priorität: 17.08.2009 DE 102009037536
(43) Veröffentlichungstag der Anmeldung: 23.02.2011
(73) Patentinhaber: Benteler Automobiltechnik GmbH, 33102 Paderborn (DE)
(72) Erfinder: Hammelmaier, Ulrich, 33100 Paderborn (DE); Wulf, Felix, 30177 Hannover (DE); Voy, Christian, 29549 Bevensen (DE); Drabon, Rodscha, 33154 Salzkotten (DE); Wagner, David, 39106 Magdeburg (DE)
(74) Vertreter: Griepenstroh, Jörg

(56) Entgegenhaltungen:
- EP-A1- 0 842 797
- EP-A1- 1 878 598
- DE-B- 1 275 366
- JP-A- 6 064 427
- JP-U- 61 001 406
- JP-U- S63 100 303
- US-A- 4 024 926
- US-A- 5 161 823

## Beschreibung

Die Erfindung betrifft eine Vorrichtung zur aktiven Spureinstellung von auf einer Radachse eines Kraftfahrzeugs angeordneten Rädern mit den Merkmalen im Oberbegriff des Patentanspruchs 1.

Die Spurlenkung eines Rades wird durch einen mit der Lenkung verbundenen Spurlenker oder durch eine elasto-kinematische Lenker-Winkelverstellung des Achssystems oder durch eine Kombination dieser beiden Vorrichtungen realisiert.

Es ist auch bekannt, insbesondere die Hinterachsen von Fahrzeugen mit Vorrichtungen zur aktiven Spurlenkung zu versehen. Derartige Spurlenkungen befinden sich seit dem Ende der 1980er Jahre im Einsatz. Die frühen Systeme waren jedoch noch nicht mit elektronischer Fahrdynamik-Regelung gekoppelt, da es derartige elektronische Systeme zu diesem Zeitpunkt noch nicht gab.

Nach dem neueren Stand der Technik werden Vorrichtungen zur aktiven Spurlenkung von Kraftfahrzeugen eingesetzt, bei denen der Spurlenker durch eine Stelleinheit ersetzt wird. Eine solche Stelleinheit kann ebenso zentral über ein Verbindungsglied mit den Spurlenkern beider Seiten verbunden werden. Die Stelleinheit verstellt dann, abhängig von den Fahrzuständen des Fahrzeugs, die Spur der Räder auf dieser Achse. Neben dem Einsatz von Stelleinheiten als Spurlenker besteht die Möglichkeit, eine zentral an einem Fahrzeugaufbau bzw. an dem Hinterachshilfsrahmen angeordnete hydraulische Stelleinheit für die aktive Spurbeeinflussung der Hinterachse zu realisieren. Dabei wird zwischen zwei verschiedenen Lenkstrategien der Hinterräder unterschieden: Zum einen ein gegensinniges Lenken der Hinterräder zu den Vorderrädern bei langsamer Fahrt, insbesondere beim Einparken des Kraftfahrzeugs, und zum anderen ein gleichsinniges Lenken der Hinterräder gegenüber den Vorderrädern bei schneller Fahrt, insbesondere bei einem Spurwechsel oder einer Kurvenfahrt.

Durch die DE 12 75 366 B zählt ein selbstpumpendes, hydropneumatisches Federbein mit einem Druckmittelanschluss für Fremdverbraucher zum Stand der Technik. Durch die Federbewegung wird eine Pumpe betätigt, durch welche bei fahrendem Fahrzeug ständig Hydraulikflüssigkeit aus einem unter niederem Druck stehenden Vorratsbehälter in einen Hochdruckarbeitsraum gefördert und dadurch der Fahrzeugaufbau angehoben wird. Die Pumpe dient gleichzeitig zur Speisung von Servoanlagen am Fahrzeug mit unter Druck stehender Hydraulikflüssigkeit. Bei den Servoanlagen kann es sich um eine Lenkhilfe, Bremshilfe oder Schalthilfe handeln.

Es besteht mithin die Möglichkeit, eine Vorrichtung zur aktiven Spur- und/oder Sturzeinstellung so auszubilden, dass sie eine durch das Kraftfahrzeug bei Kurvenfahrt eingebrachte Aufbaubewegung (Wanken, Rollen) in gezielte Stellbewegungen der Stelleinheit zur Spur- bzw. Sturzbeeinflussung nutzt. Dazu steht mindestens einer der Aufbaudämpfer, die zwischen dem Fahrzeugaufbau und der Radachse angeordnet sind, derart mit der Stelleinheit in Wirkverbindung, dass er einen Antrieb für die Spur- und/oder Sturzeinstellungseinheit bildet. Dadurch ist es möglich, dass die aktive Einstellung der auf dieser Radachse angeordneten Kraftfahrzeugräder ausschließlich aus der Bewegung des Fahrzeugaufbaus gespeist wird. Die Aufbaudämpfer verursachen bei einem Wanken oder Rollen des Fahrzeugs einen Fluss einer Hydraulikflüssigkeit, wobei die Verdrängung der Hydraulikflüssigkeit eine die Spurlenker verstellende Stelleinheit ansteuert. Wenn die Funktion der aktiven Spur- und/oder Sturzbeeinflussung nicht benötigt wird, z.B. bei Geradeausfahrt, die auch bei der CO₂-Ermittlung grundlegend ist, befindet sich die Stelleinheit in einer Neutrallage. Hierbei benötigt die Stelleinheit keine Energie. Auch beim gleichmäßigen Einfedern zweier Aufbaudämpfer an einer Achse kommt es nicht zu einer Betätigung der Stelleinheit. In diesem Fall wäre es aber von Vorteil, wenn die Aufbaudämpfer als Teleskopschwingungsdämpfer die Schwingungsenergie der Aufbau- und Radschwingungen in Wärme umwandelt. Dies sollte zweckmäßigerweise sowohl bei der Geradeausfahrt als auch bei der Kurvenfahrt möglich sein.

Die JP S63 100303 U offenbart eine Vorrichtung zur aktiven Spureinstellung von auf einer Radachse eines Kraftfahrzeugs angeordneten Rädern, umfassend zwei zwischen einem Fahrzeugaufbau und der Radachse angeordnete hydraulische Aufbaudämpfer, die über Hydraulikleitungen mit einer hydraulischen Stelleinheit zur Spurverstellung in Wirkverbindung stehen. Die Aufbaudämpfer sind als Differentialzylinder ausgebildet. Das Hydraulikfluid wird von einer Seite eines in den Zylinder geführten Trennkolbens des Aufbaudämpfers zu einer Kammer der Stelleinheit und von der anderen Kammer der Stelleinheit über eine rückführende Hydraulikleitung zurück auf die andere Seite des Trennkolbens übergeleitet. Der Erfindung liegt die Aufgabe zu Grunde, eine Vorrichtung zur aktiven Spureinstellung aufzuzeigen, mit welcher es möglich ist, eine Dämpfungsfunktion sowohl bei Geradeaus- als auch bei Kurvenfahrt aufrechtzuerhalten, aber auch zusätzlich die Fluidströmung des Aufbaudämpfers zur Stellung eines externen Zylinders einer Stelleinheit zu nutzen.

Diese Aufgabe wird durch eine Vorrichtung mit den Merkmalen des Patentanspruchs 1 gelöst.

Die Unteransprüche betreffen vorteilhafte Weiterbildungen.

Die erfindungsgemäße Vorrichtung zur aktiven Spureinstellung umfasst zwei zwischen einem Fahrzeugaufbau und der Radachse angeordnete hydraulische Aufbaudämpfer, die über Hydraulikleitungen mit einer hydraulischen Stelleinheit zur Spurverstellung in Wirkverbindung stehen, so dass eine durch das Kraftfahrzeug bei Kurvenfahrt eingebrachte Aufbaubewegung (Wanken, Rollen) in gezielte Stellbewegungen der Stelleinheit zur Spur- bzw. Sturzbeeinflussung genutzt werden kann. Dadurch ist es möglich, die aktive Einstellung der auf dieser Radachse angeordneten Kraftfahrzeugräder ausschließlich aus der Bewegung des Fahrzeugaufbaus zu speisen. Die Vorrichtung sieht hierzu einen Aufbaudämpfer vor, der als Diffenrentialzylinder ausgebildet ist und eine Drossel besitzt, die außerhalb eines Zylinders des Aufbaudämpfers angeordnet ist. Über diese Drossel wird ein Hydraulikfluid auf einer Seite des Trennkolbens bzw. von einer Kammer des Zylinders und von dort auf die andere Seite des Trennkolbens bzw. in die andere Kammer des Zylinders geleitet. Die Drossel befindet sich außerhalb des Zylinders, damit das Hydraulikfluid über die Drossel nicht nur von der einen zur anderen Kammer strömen kann, sondern auch zur Stelleinheit und von dort über eine rückführende Hydraulikleitung zurück in die korrespondierende Kammer des Zylinders. Das hat den Vorteil, dass der Aufbaudämpfer als Schwingungsdämpfer nicht nur bei Geradeausfahrt, bei welcher von einem gleichmäßigen Einfedern ausgegangen wird, dämpft, sondern auch bei der Kurvenfahrt, also auch dann, wenn die Aufbaudämpfer die Stelleinheit antreiben.

Es ist möglich, ein Wegeventil vorzusehen, welches zwischen der Drossel und einer Hydraulikleitung zur Stelleinheit angeordnet ist. Dieses Wegeventil weist eine erste Schaltstellung auf, in welcher das Hydraulikfluid von der einen Seite des Trennkolbens über die Drossel unmittelbar der anderen Seite des Trennkolbens zuführbar ist und wobei in einer zweiten Schaltstellung das Hydraulikfluid von der einen Seite des Trennkolbens über die Drossel der Stelleinheit zuleitbar ist. Das Wegeventil dient also zur Umschaltung zwischen reiner Dämpfungswirkung bei Geradeausfahrt und der Volumenstromnutzung bei Ansteuerung der Stelleinheit. In der ausschließlichen Dämpfungsstellung wird das Hydraulikfluid nicht zur Stelleinheit geleitet, sondern strömt über die Drossel unmittelbar von der einen Seite des Trennkolbens auf die andere Seite des Trennkolbens. Wenn eine Lenkbewegung erfolgt und somit ein Wanken oder Rollen des Kraftfahrzeugs erwartet wird, wird das Wegeventil betätigt, so dass das Hydraulikfluid von der Drossel gedämpft vom Aufbaudämpfer zur Stelleinheit und von dort wieder zurück zum Aufbaudämpfer gelangt.

Die Drossel und das Wegeventil sollten möglichst nah am Differentialzylinder liegen. Dies ermöglicht einerseits eine kompakte Bauweise. Andererseits werden negative Einflüsse von langen Leitungswegen vermieden. Es ist daher vorgesehen, dass der Strömungspfad des Hydraulikfluids vom Zylinder zur Drossel kürzer ist als der Strömungspfad von der Drossel zur Stelleinheit. Gleiches gilt für das Wegeventil, das dementsprechend nahe an der Drossel angeordnet sein soll. Die Drossel und das Wegeventil können somit unmittelbar am Zylinder der Aufbaudämpfer angeordnet sein.

Die Erfindung wird nachfolgend anhand eines in den Zeichnungen dargestellten Ausführungsbeispiels näher erläutert. Es zeigt:
- Figur 1: eine Ansicht eines schematisch dargestellten Achsbereichs eines Kraftfahrzeugs von hinten und
- Figur 2: eine schematische Detailansicht eines Aufbaudämpfers mit Drossel und Wegeventil.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Vorrichtungen und deren Bestandteile. Diese Begriffe sind nicht einschränkend zu verstehen, d.h. in verschiedenen Arbeitsstellungen oder durch spiegelsymmetrische Auslegungen oder dergleichen können sich diese Bezüge ändern.

Die Zeichnungen sind Ausführungsbeispiele und zeigen die Erfindung anhand einer Spureinstellungseinheit für Kraftfahrzeugräder.

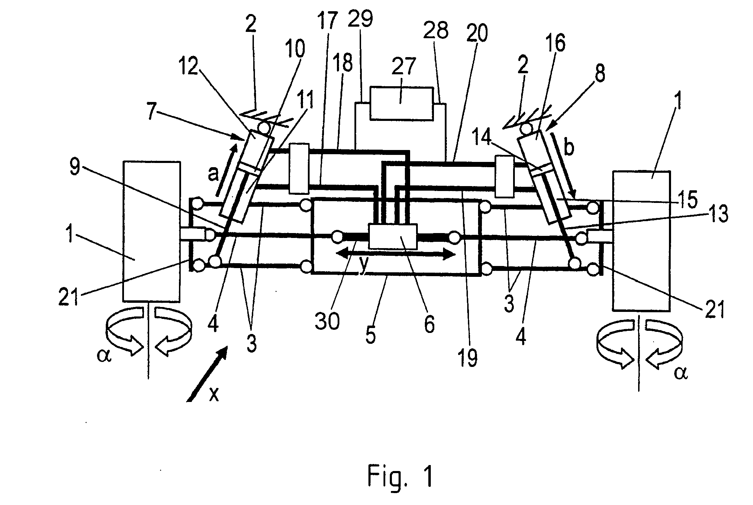

Die Figur 1 zeigt eine Ausführungsform einer Vorrichtung zur aktiven Spureinstellung von auf einer Radachse eines Kraftfahrzeugs angeordneten Rädern 1. Die Räder 1 sind auf einer Radachse, insbesondere einer Hinterachse, angeordnet, die am Fahrzeugaufbau 2, insbesondere an einem Achsträger, befestigt ist.

Das Rad 1 ist an einem Radträger 21 befestigt, an dem ein Spurlenker 4 und mindestens zwei Radlenker 3 angeordnet sind. Denkbar ist auch eine Ausbildung der Radachse als Starrachse oder als Halbstarrachse, insbesondere als Koppel- oder Verbundlenkerachse. An jeweils einem der Radlenker 3 des Rades 1 ist ein Aufbaudämpfer 7, 8 angeordnet, welcher Aufbaubewegungen des Kraftfahrzeugs, beispielsweise bei einer Kurvenfahrt des Kraftfahrzeugs, abdämpft. Die Spurlenker 4 der beiden Räder 1 stehen mit einer Stelleinheit 6 in Wirkverbindung, welche durch gezielte Stellbewegungen die Spur der Räder 1 verstellt. Diese Stelleinheit 6 ist außerdem mit mindestens einem der Aufbaudämpfer 7, 8 derart verbunden, dass der Aufbaudämpfer 7, 8 einen Antrieb für die Stelleinheit 6 bildet. Die Ansteuerung der hydraulischen Stelleinheit 6 erfolgt bevorzugt über ein Steuergerät, welches vorher alle fahrdynamischen oder sicherheitsrelevanten Daten des Kraftfahrzeugs auswertet und dabei die optimale Radstellung an den Rädern 1, welche mit der aktiven Spurlenkungsvorrichtung verbunden sind, ermittelt.

Vorzugsweise ist eine Druckerzeugungseinheit 27 vorgesehen, welche elektrisch betreibbar ist. Diese Druckerzeugungseinheit 27 ist dabei an die Stelleinheit 6 oder die Stelleinheit 6 und die hydraulischen Aufbaudämpfer 7, 8 verbindenden Hydraulikleitungen 17, 18, 19, 20 angeschlossen. Durch diesen elektrisch erzeugten hydraulischen Druck kann für den Fall einer erwünschten Wendekreisverkleinerung des Kraftfahrzeugs bzw. einer Bremswegverkürzung die Spurverstellung auch ohne die durch Aufbaudämpfer 7, 8 zur Verfügung gestellte Energie erfolgen.

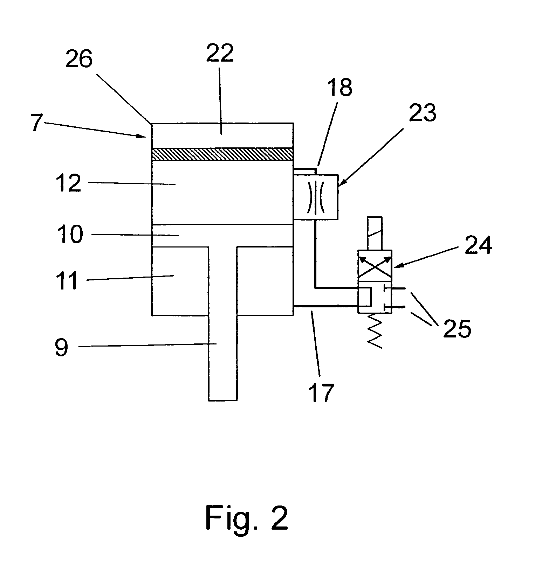

Die Stelleinheit 6 und die Aufbaudämpfer 7, 8 sind als hydraulische Aufbaudämpfer 7, 8 bzw. als hydraulische Stelleinheit 6 ausgebildet. Jeder der hydraulischen Aufbaudämpfer 7, 8 besteht dabei in bekannter Weise aus einem Gehäuse in Form eines Zylinders 26, in das eine Stange 9, 13 hineinragt (Figur 2). Im Gehäuseinneren befindet sich ein Trennkolben 10, 14, welcher an dem anderen Ende der Stange 9, 13 angebracht ist und in dem Zylinder 26 verfahrbar ist. Durch diesen Trennkolben 10, 14 ist der Zylinder 26 der Aufbaudämpfer 7, 8 in zwei Kammern 11, 12 bzw. 15, 16 aufgeteilt, welche mit der Hydraulikflüssigkeit gefüllt sind. An jede dieser Kammern 11, 12 bzw. 15, 16 ist eine Hydraulikleitung 17, 18 bzw. 19, 20 angeschlossen, welche in Kammern der Stelleinheit 6 münden, wobei die Kammern der Stelleinheit 6 durch einen Stellkolben voneinander getrennt sind. Eine Kolbenstange 30 durchsetzt das Gehäuse der Stelleinheit 6. Spurlenker 4 der Räder sind mit der Kolbenstange 30 verbunden und werden von dieser betätigt. Fährt ein mit einer solchen Vorrichtung ausgestattetes Kraftfahrzeug durch eine Kurve, wird auf Grund der dabei auftretenden Neigung des Fahrzeugs und damit auch des Fahrzeugaufbaus 2 bei einem der Aufbaudämpfer 7, 8 die Stange 9, 13 weit in den Aufbaudämpfer 7, 8 hineingedrückt (Pfeil a). Gleichzeitig wird der Fahrzeugaufbau 2 an dem anderen Aufbaudämpfer 8, 7 angehoben, wodurch die Stange 13, 9 des Aufbaudämpfers 8, 7 weiter aus dem Aufbaudämpfer 8, 7 heraussteht (Pfeil b). Dies führt dazu, dass die in den Aufbaudämpfern 7, 8 befindliche Hydraulikflüssigkeit durch das Verschieben des Trennkolbens 10 bzw. 14 der Aufbaudämpfer in eine der Kammern der Stelleinheit 6 gedrückt wird, wodurch die Kolbenstange 30 verlagert und der Spurlenker 4 betätigt wird.

In Figur 1 ist zu erkennen, dass die Hydraulikleitungen 17, 18 bw. 19, 20 jeweils eine als Kasten dargestellte Funktionsgruppe durchlaufen, die nachfolgend anhand der Figur 2 erläutert wird.

Figur 2 zeigt beispielhaft den in der Bildebene der Figur 1 linken Aufbaudämpfer 7. Der Aufbaudämpfer 7 ist als Differentialzylinder konzipiert. Das heißt, er besitzt nur auf einer Seite der Kolbenfläche eine Kolbenstange 9. Dadurch besitzt er zwei verschieden große Wirkflächen: Zum einen die Fläche auf der Kolbenseite, die komplett wirkt und zum anderen die stangenseitige Fläche, bei der nur die Ringfläche wirkt. Innerhalb dieses Zylinders 26 befindet sich nicht nur der Trennkolben 10, welcher die beiderseitigen Kammern 11, 12 voneinander trennt und zudem ein Ausgleichsraum 22 zur Aufnahme des Kolbenstangenvolumens, das beim Einfedern in den Aufbaudämpfer 7 einfährt. Anders als bei Einrohr- oder Zweirohrdämpfern mit innenliegenden Druck- und Zugstufenventilen kann das Hydraulikfluid von der in der Bildebene oberen Kammer 12 nur über eine Drossel 23 in die untere Kammer 11 gelangen. Die Drossel 23 befindet sich in unmittelbarer Nähe am Aufbaudämpfer 7, damit der Strömungspfad des Hydraulikfluids von der Kammer 12 in die Kammer 11 möglichst kurz ist. Dies gilt auch für das zusätzlich vorgesehene Wegeventil 24, welchem das Fluid von der Drossel 23 zuströmt. Das Wegeventil 24 ist ein 4/2-Wegeventil mit vier Anschlüssen und zwei Schaltstellungen. Das Wegeventil 24 ist elektrisch oder hydraulisch betätigbar. In der dargestellten Position befindet es sich in einer Schaltstellung, in welcher das Hydraulikfluid aus der oberen Kammer 12 durch die Drossel 23 und das Wegeventil 24 umgeleitet wird in die Kammer 11. Es befindet sich also in einer reinen Dämpfungsstellung, wie sie beispielsweise bei Geradeausfahrten gewünscht ist. Durch Verlagern des Wegeventils 24 in die zweite Schaltstellung wird das Hydraulikfluid aus der oberen Kammer 12 über die beiden Anschlüsse 25 des Wegeventils 24 der in Figur 1 darstellten Stelleinheit 6 zugeleitet bzw. von dieser zurück in die Kammer 11 geleitet. Auch in dieser Schaltstellung erfolgt eine Drosselung des Fluidstroms über die Drossel 23, was einer Dämpfung gleich kommt. Bei der Drossel 23 und bei dem Wegeventil 24 handelt es sich um beispielhafte Ausführungsformen. Die Drossel 23 kann auch einstellbar gestaltet sein. Im vorliegenden Beispiel besitzt die Drossel allerdings einen konstanten Querschnitt.

In gleicher Weise, wie es in Figur 2 dargestellt ist, ist auch der andere Aufbaudämpfer 8 in Figur 1 mit einer Drossel 23 und einem Wegeventil 24 ausgestattet.

### Bezugszeichen:

- 1 -: Rad
- 2 -: Fahrzeugaufbau
- 3 -: Radlenker
- 4 -: Spurlenker
- 5 -: Hilfsrahmen
- 6 -: Stelleinheit
- 7 -: Aufbaudämpfer
- 8 -: Aufbaudämpfer
- 9 -: Stange
- 10 -: Trennkolben
- 11 -: Kammer
- 12 -: Kammer
- 13 -: Stange
- 14 -: Trennkolben
- 15 -: Kammer
- 16 -: Kammer
- 17 -: Hydraulikleitung
- 18 -: Hydraulikleitung
- 19 -: Hydraulikleitung
- 20 -: Hydraulikleitung
- 21 -: Radträger
- 22 -: Ausgleichsraum
- 23 -: Drossel
- 24 -: Wegeventil
- 25 -: Anschluss
- 26 -: Zylinder
- 27 -: Druckerzeugungseinheit
- 28 -: Hydraulikleitung
- 29 -: Hydraulikleitung
- 30 -: Kolbenstange

## Patentansprüche

1. Vorrichtung zur aktiven Spureinstellung von auf einer Radachse eines Kraftfahrzeugs angeordneten Rädern, umfassend zwei zwischen einem Fahrzeugaufbau (2) und der Radachse angeordnete hydraulische Aufbaudämpfer (7, 8), die über Hydraulikleitungen (17, 18, 19, 20) mit einer hydraulischen Stelleinheit (6) zur Spurverstellung in Wirkverbindung stehen, wobei die Aufbaudämpfer (7, 8) als Differentialzylinder ausgebildet sind, wobei ein Hydraulikfluid von einer Seite eines in dem Zylinder (26) geführten Trennkolbens (10, 14) des Aufbaudämpfers (7, 8) zu einer Kammer der Stelleinheit (6) und von einer anderen Kammer der Stelleinheit (6) über eine rückführende Hydraulikleitung (17, 18, 19, 20) zurück auf die andere Seite des Trennkolbens (10, 14) überleitbar ist, **dadurch gekennzeichnet, dass** die Aufbaudämpfer (7, 8) eine Drossel (23) besitzen, die außerhalb eines Zylinders (26) des Aufbaudämpfers (7, 8) angeordnet ist, wobei das Hydraulikfluid über die Drossel (23) von einer Seite des Trennkolbens (10, 14), über die Stelleinheit (6) zurück auf die andere Seite des Trennkolbens (10, 14) überleitbar ist, wobei ein Wegeventil (24) vorgesehen ist, welches zwischen der Drossel (23) und einer Hydraulikleitung (17, 18, 19, 20) zur Stelleinheit (6) angeordnet ist, wobei das Wegeventil (24) eine erste Schaltstellung aufweist, in welcher das Hydraulikfluid von der einen Seite des Trennkolbens (10, 14) über die Drossel (23) unmittelbar der anderen Seite des Trennkolbens (10, 14) zuführbar ist und wobei in einer zweiten Schaltstellung das Hydraulikfluid von der einen Seite des Trennkolbens (10, 14) über die Drossel (23) der Stelleinheit (6) zuleitbar ist.

2. Vorrichtung nach Anspruch 1, **dadurch gekennzeichnet, dass** der Strömungspfad des Hydraulikfluids vom Zylinder (26) zur Drossel (23) kürzer ist als der Strömungspfad von der Drossel (23) zur Stelleinheit (6).

3. Vorrichtung nach Anspruch 1 oder 2, **dadurch gekennzeichnet, dass** der Strömungspfad des Hydraulikfluids vom Wegeventil (24) zum Zylinder (26) kürzer ist als der Strömungspfad von dem Wegeventil (24) zur Stelleinheit (6).

4. Vorrichtung nach einem der Ansprüche 1 bis 3, **dadurch gekennzeichnet, dass** die Drossel (23) unmittelbar am Zylinder (26) angeordnet ist.

5. Vorrichtung nach einem der Ansprüche 1 bis 4, **dadurch gekennzeichnet, dass** das Wegeventil (24) unmittelbar am Zylinder (26) angeordnet ist.

## Claims

1. Device for active toe adjustment of wheels arranged on a wheel axle of a motor vehicle, comprisingtwo hydraulic body dampers (7, 8) arranged between a vehicle body (2) and the wheel axle, which are operatively connected via hydraulic lines(17, 18, 19, 20) to a hydraulic servo unit (6) for adjusting the toe, said body dampers (7, 8) being configured as differential cylinders, ahydraulic fluid being transferable from one side of aseparating piston (10, 14) of the body damper (7, 8) guided in the cylinder (26) to a chamber of the servo unit (6) and from another chamber of the servo unit (6) back to the other side of the separating piston (10, 14) via returning hydraulic line (17, 18, 19, 20), **characterised in that** the body dampers (7, 8) comprise a throttle (23) which is arranged outside a cylinder (26) of the body damper (7, 8), the hydraulic fluid being transferable via the throttle (23) from one side of the separating piston (10, 14) through the servo unit (6) back to the other side of the separating piston (10, 14), a directional valve (24) being provided which is arranged between the throttle (23) and a hydraulic line (17, 18, 19, 20) to the servo unit (6), the directional valve (24) having a first switching position in which the hydraulic fluid can be supplied from one side of the separating piston (10, 14) via the throttle (23) directly to the other side of the separating piston (10, 14) and wherein in a second switching position the hydraulic fluid can be supplied from one side of the separating piston (10, 14) via the throttle (23) to the servo unit (6).

2. Device according to claim 1, **characterised in that** the flow path of the hydraulic fluid from the cylinder (26) to the throttle (23) is shorter than the flow path from the throttle (23) to the servo unit (6).

3. Device according to claim 1 or 2, **characterised in that** the flow path of the hydraulic fluid from the directional valve (24) to the cylinder (26) is shorter than the flow path from the directional valve (24) to the servo unit (6).

4. Device according to one of claims 1 to 3, **characterised in that** the throttle (23) is arranged directly on the cylinder (26).

5. Device according to one of claims 1 to 4, **characterised in that** the directional valve (24) is arranged directly on the cylinder (26).

## Revendications

1. Dispositif de réglage actif du parallélisme de roues montées sur un essieu de roues d'un véhicule automobile, comprenant deux amortisseurs de montage hydrauliques (7, 8) aménagés entre une carrosserie de véhicule (2) et l'essieu de roues, lesquels amortisseurs coopèrent, via des conduites hydrauliques (17, 18, 19, 20), avec une unité de réglage hydraulique (6) pour le réglage du parallélisme, dans lequel les amortisseurs de montage (7, 8) se présentent sous la forme de cylindres différentiels, dans lequel un fluide hydraulique peut être transféré d'un côté d'un piston séparateur (10, 14) de l'amortisseur de montage (7, 8) guidé dans le cylindre (26) à une chambre de l'unité de réglage (6) et d'une autre chambre de l'unité de réglage (6), via une conduite hydraulique de retour (17, 18, 19, 20), de nouveau à l'autre côté du piston séparateur (10, 14), **caractérisé en ce que** les amortisseurs de montage (7, 8) possèdent un étranglement (23) qui est ménagé à l'extérieur d'un cylindre (26) de l'amortisseur de montage (7, 8), dans lequel le fluide hydraulique peut être transféré, via l'étranglement (23), d'un côté du piston séparateur (10, 14) et via l'unité de réglage (6) à nouveau à l'autre côté du piston séparateur (10, 14), dans lequel il est prévu un tiroir de distribution (24) disposé entre l'étranglement (23) et une conduite hydraulique (17, 18, 19, 20) vers l'unité de réglage (6), dans lequel le tiroir de distribution (24) présente une première position de distribution, dans laquelle le fluide hydraulique peut être transféré du premier côté du piston séparateur (10, 14), via l'étranglement (23), directement à l'autre côté du piston séparateur (10, 14) et dans lequel, dans une seconde position de distribution, le fluide hydraulique peut être transféré du premier côté du piston séparateur (10, 14) à l'unité de réglage (6) via l'étranglement (23).

2. Dispositif selon la revendication 1, **caractérisé en ce que** le trajet d'écoulement du fluide hydraulique du cylindre (26) à l'étranglement (23) est plus court que le trajet d'écoulement de l'étranglement (23) à l'unité de réglage (6).

3. Dispositif selon la revendication 1 ou la revendication 2, **caractérisé en ce que** le trajet d'écoulement du fluide hydraulique du tiroir de distribution (24) au cylindre (26) est plus court que le trajet d'écoulement du tiroir de distribution (24) à l'unité de réglage (6).

4. Dispositif selon l'une quelconque des revendications 1 à 3, **caractérisé en ce que** l'étranglement (23) est ménagé directement sur le cylindre (26).

5. Dispositif selon l'une quelconque des revendications 1 à 4, **caractérisé en ce que** le tiroir de distribution (24) est aménagé directement sur le cylindre (26).
